# EUROPÄISCHE PATENTSCHRIFT

(11) **EP 1 205 406 B1**
(45) Veröffentlichungstag und Bekanntmachung des Hinweises auf die Patenterteilung: **02.05.2003**
(21) Anmeldenummer: 01811056.9
(22) Anmeldetag: 30.10.2001
(51) Int. Cl.: B65G 1/137

(54) **Verfahren und Einrichtung zum Lagern und Ausliefern von Gegenständen**
Method and device for storing and distributing articles
Procédé et dispositif de stockage et de distribution d'objets

(30) Priorität: 08.11.2000 CH 217500
(43) Veröffentlichungstag der Anmeldung: 15.05.2002
(73) Patentinhaber: Denipro AG, 8570 Weinfelden (CH)
(72) Erfinder: Roesch, Andreas, 8500 Frauenfeld (CH)
(74) Vertreter: Frei, Alexandra Sarah

(56) Entgegenhaltungen:
- EP-A- 0 627 371
- US-A- 5 678 680

## Beschreibung

Die Erfindung liegt auf dem Gebiete der Förder- und Lagertechnik und betrifft ein Verfahren und eine Einrichtung nach den Oberbegriffen der entsprechenden, unabhängigen Patentansprüche. Verfahren und Einrichtung dienen der vorübergehenden Lagerung und versandbereiten Auslieferung von Gegenständen.

Es ist bekannt, Gegenstände aus Lagern zu Kommissionen (z.B. anhand von entsprechenden Bestellungen) zusammenzustellen und die Kommissionen durch Verpacken für einen Versand bereitzustellen. Dafür werden beispielsweise umfangreiche Lagerund Kommissionierungs-Einrichtungen eingesetzt, die eine grosse Zahl von Lagerabteilen mit einem Eingang und einem Ausgang aufweisen sowie Einrichtungen zur Einlagerung von Gegenständen durch die Eingänge der Lagerabteile und zur wahlweisen Entnahme von Gegenständen durch die Ausgänge der Lagerabteile. Die Entnahme der Gegenstände geschieht dabei üblicherweise kommissionenweise, wobei die Gegenstände, die zu einer Kommission gehören, im wesentlichen nacheinander aus den entsprechenden Lagerabteilen entnommen und üblicherweise in einem betriebseigenen Gefäss gesammelt werden. In grossen Anlagen ist es durchaus möglich, gleichzeitig Gegenstände für verschiedene Kommissionen aus den Lagerabteilen zu entnehmen und in entsprechenden Gefässen zu sammeln, wobei die Gefässe auf vorgegebenen Wegen von einem Lagerabteilausgang zum nächsten geführt werden. Wenn alle zu einer Kommission gehörenden Gegenstände aus Lagerabteilen entnommen und in einem Gefäss gesammelt sind, wird das Gefäss üblicherweise einer Verpackungsstation zugeführt, wo ganze Kommissionen verpackt und versandfertig gemacht werden. Da die gemäss Anforderungen (z.B. Bestellungen) erstellten Kommissionen meistens verschiedene Zahlen von Gegenständen und in vielen Fällen die Gegenstände auch sehr verschiedene Grössen haben, wird der Verpackungsschritt üblicherweise mindestens teilweise von Hand durchgeführt, wobei die Gegenstände jeder Kommission je nach Umfang der Kommission zu einer oder mehreren Versandeinheiten verpackt und dann adressiert werden.

Kommissionieranlagen, wie sie oben kurz beschrieben sind, sind beispielsweise bekannt von den Publikationen EP-0627371 (oder US-5664928, F360) oder EP-0677459 (oder US-5678680, F382).

Wie aus der obigen Kurzbeschreibung von bekannten Kommissionieranlagen leicht ersichtlich ist, sind diese vorrichtungsmässig sehr aufwendig und stellt der Verpakkungsschritt, insbesondere wenn verschieden grosse Gegenstände kommissioniert werden, eine hohe Hürde für eine vollständige Automatisierung dar.

Die Erfindung stellt sich nun die Aufgabe, ein Verfahren und eine Einrichtung zu schaffen, die der vorübergehenden Lagerung und versandfertigen Auslieferung von Gegenständen dienen und mit denen eine weitergehende Automatisierung und vorrichtungsmässige Vereinfachung möglich wird, als dies der Fall ist für bekannte Einrichtungen, die demselben Zwecke dienen.

Diese Aufgabe wird gelöst durch das Verfahren und die Einrichtung, wie sie in den Patentansprüchen definiert sind.

Nach dem erfindungsgemässen Verfahren werden zugelieferte Gegenstände einzeln oder gegebenenfalls in kleinen Gruppen versandfertig verpackt aber noch in einem von einer bestimmten Destination unabhängigen Zustand (z.B. unadressiert) gehalten. Als Verpackungen dienen beispielsweise leicht zu handhabende, verschliessbare Beutel, die gegebenenfalls verschiedene Grössen haben können. Die verpackten Gegenstände werden dann einzeln von je einem Halteelement übernommen, wobei jedes Halteelement unabhängig von anderen Halteelementen entlang eines Schienensystems verfahrbar ist. Verpackte Gegenstände zusammen mit den Halteelementen werden dann zu einem Lagerbereich transportiert und dort gelagert. Der Lagerbereich weist Schienenstränge und Schienenstränge verbindende, steuerbare Weichen auf, derart, dass die Halteelemente im wesentlichen unabhängig von der Reihenfolge ihrer Einlagerung bei Bedarf aus dem Lagerbereich abgerufen werden können. Die abgerufenen Gegenstände bzw. deren Verpackungen werden dann gemäss Destination bezeichnet (z.B. adressiert), von den Halteelementen zur Auslieferung abgegeben und weggefördert. Die Halteelemente werden in leerem Zustand für eine weitere Übernahme von Gegenständen rückgeführt. Sie werden während dem Betrieb nie vom Schienensystem getrennt.

Die erfindungsgemässe Einrichtung weist ein im wesentlichen in sich geschlossenes Schienensystem mit einer Vielzahl von entlang der Schienenstränge des Schienensystems voneinander unabhängig verfahrbaren Halteelementen auf. Ferner weist die Einrichtung eine Verpackungs- und Übernahmestation und eine Adressier- und Abgabestation auf. Das Schienensystem führt von der Verpackungs- und Übernahmestation über mindestens einen Zuführungsstrang zu mindestens einem Lagerbereich mit Lagersträngen und steuerbaren Weichen, vom Lagerbereich über mindestens einen Auslieferungsstrang zur Adressier- und Abgabestation und von da für den Rücklauf der leeren Halteelemente über mindestens einen Rückführungsstrang zurück zur Verpackungs- und Übernahmestation.

Die Verpackungs- und Übernahmestation ist ausgerüstet für die Zuführung von vereinzelten Gegenständen (gegebenenfalls auch kleine Gruppen von Gegenständen) zur Verpackung der vereinzelten Gegenstände und zu deren Übernahme durch je ein Halteelement. Die Adressier- und Abgabestation ist ausgerüstet zur Destinationsbezogenen Bezeichnung (z.B. Adressierung) von mittels Halteelementen aus dem Lagerbereich zugeführten, verpackten Gegenständen und zu deren Abgabe durch die Halteelemente. Der mindestens eine Lagerbereich weist beispielsweise eine Mehrzahl von funktionsmässig parallel geführten Lagersträngen auf, auf die und von denen weg Halteelemente mit verpackten Gegenständen über entsprechend steuerbare Weichen oder Weichensysteme geführt werden. Auch im Bereiche des Rückführungsstranges kann gegebenenfalls ein ähnlich ausgerüsteter Bereich für die Pufferung von leeren Halteelementen vorgesehen werden.

Vorteilhafterweise sind die Halteelemente und die Schienenstränge derart ausgebildet, dass die verpackten Gegenstände hängend transportiert werden können und dass für den Antrieb der Halteelemente auf abfallenden Schienensträngen die Schwerkraft ausreicht. In einem solchen Falle ist es möglich, den Zuführungsstrang und/oder den Auslieferungsstrang steigend, vorteilhafterweise im wesentlichen senkrecht anzuordnen und mit einem geeigneten Antrieb für die Halteelemente zu versehen und im wesentlichen alle anderen Schienenstränge des Schienensystems, insbesondere die Schienenstränge des Lagerbereichs abfallend anzuordnen und die Förderung auf diesen Strängen der Schwerkraft zu überlassen.

Die erfindungsgemässe Einrichtung weist ferner mindestens eine Rechnereinheit auf, die Daten betreffend einzulagernder und auszuliefernder Gegenstände über entsprechende Datenleitungen oder über ein Eingabemittel empfängt. Aus diesen Daten generiert die Rechnereinheit Steuerdaten für die Verpackungs- und Übernahmestation, für die Weichen des mindestens einen Lagerbereiches und für die Adressier- und Abgabestation. Die Einrichtung kann dabei allein aufgrund der der Rechnereinheit zugeführten Daten nur von der Rechnereinheit aus gesteuert werden. Es ist aber auch möglich, Teilbereiche mit Sensormitteln auszustatten und autonom zu steuern, beispielsweise die verpackten Gegenstände und/oder die Halteelemente mit geeigneten Identifikationsmitteln (z.B. visueller Code oder elektronischer Speicher) auszustatten und die Identifikationen für lokale Steuerungsfunktionen mittels lokaler Lesegeräte auszulesen.

Der Hauptunterschied zwischen dem erfindungsgemässen Verfahren und entsprechenden, bekannten Verfahren gemäss dem Stande der Technik besteht darin, dass auf die Zusammenstellung von Kommissionen ganz verzichtet wird. Die Gegenstände verlassen die erfindungsgemässe Einrichtung nicht in Form von Kommissionen sondern als einzelne, versandfertig verpackte Gegenstände (gegebenenfalls kleine Gruppen von Gegenständen, die aber nie vereinzelt wurden). Die hauptsächlichen Vorteile von Verfahren und Einrichtung gemäss Erfindung ergeben sich dadurch, dass die Verpackung eingangsseitig erfolgt und dass die Gegenstände im wesentlichen einzeln gehalten eingelagert werden. Dadurch entfällt mindestens bei der Handhabung von Gegenständen gleichen oder ähnlichen Formats (z.B. CDs) die Erstellung von verschiedenen Verpackungen. Werden Gegenstände mit sehr verschiedenen Formaten gehandhabt, werden diese wie üblich in grösseren Batches gleicher Gegenstände zugeliefert, so dass für deren Verpackung die Verpackungs- und Übernahmestation nicht dauernd umgestellt werden muss. Dadurch wird eine Automatisierung erleichtert oder manuelle Arbeit reduziert. Da die Gegenstände gehalten gelagert werden, müssen sie für die Entnahme aus dem Lager nicht ergriffen werden. Eine für eine solche Ergreifung notwendige genaue Positionierung der gelagerten Gegenstände und/oder entsprechend intelligente Entnahmewerkzeuge sind also nicht notwendig. Die genannten Vorteile wiegen ein Mehr an Verpackungsmaterial und gegebenenfalls an Versandkosten bei weitem auf.

Das erfindungsgemässe Verfahren und eine vorteilhafte Ausführungsform der erfindungsgemässen Einrichtung werden anhand der folgenden Figuren im Detail beschrieben. Dabei zeigen:
- **Figur 1**: ein Schema des Prinzips von Verfahren und Einrichtung gemäss Erfindung;
- **Figur 2**: eine vorteilhafte Ausführungsform der erfindungsgemässen Einrichtung.

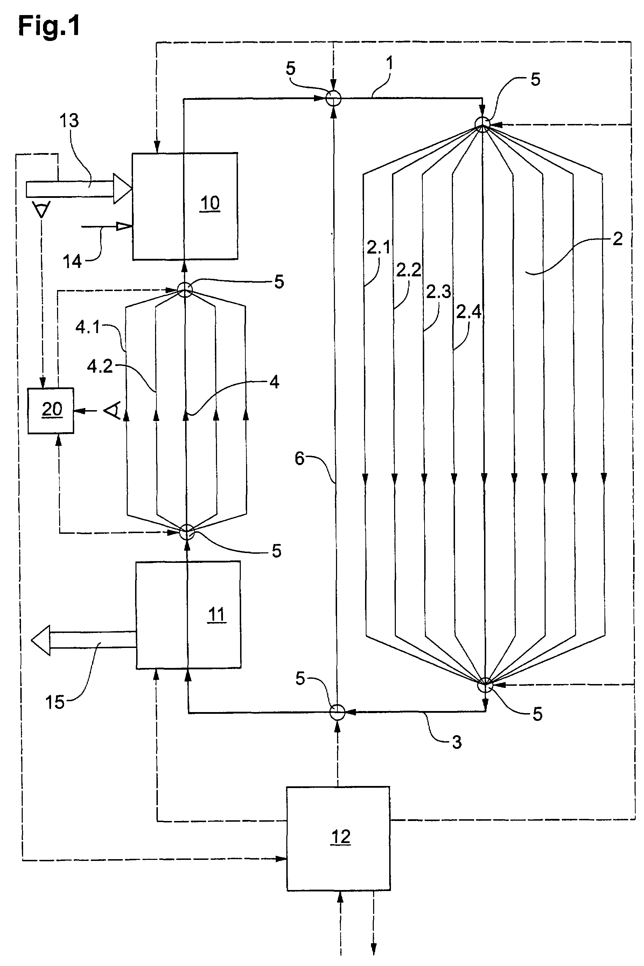

**Figur 1** zeigt sehr schematisch an einem einfachen Beispiel das Prinzip von Verfahren und Einrichtung gemäss Erfindung. Ausgezogene Linien bezeichnen Schienenstränge des Schienensystems (Transportrichtung gemäss Pfeilen), Kreise bezeichnen gesteuerte Weichen oder Weichensysteme des Schienensystems, gestrichelte Linien bezeichnen Datenleitungen und Kasten bezeichnen Einheiten mit verschiedenen, anderen Funktionen.

Das Schienensystem umfasst einen Zuführungsstrang 1, einen Lagerbereich 2, einen Auslieferungsstrang 3 und einen Rückführungsstrang 4 auf, sowie insbesondere im Lagerbereich 2 eine Mehrzahl von steuerbaren Weichen oder Weichensystemen 5, die an Zusammenführungen und Verzweigungen von Schienensträngen angeordnet sind. Die Weichenfunktionen können als multifunktionale Weichen (mit mehr als zwei Stellmöglichkeiten) realisiert werden oder als Systeme von bifunktionalen Weichen (Weichen mit nur zwei Stellmöglichkeiten).

Der in der Figur 1 dargestellte Lagerbereich 2 weist eine Mehrzahl von mindestens funktionsmässig parallelen Lagersträngen 2.1, 2.2, ... auf und diese Lagerstränge mit dem Zuführungsstrang und dem Auslieferungsstrang wahlweise verbindende, steuerbare Weichen oder Weichensysteme. Ferner weist der dargestellte Lagerbereich 2 einen Lager-Rückführungsstrang 6 auf, der für die Rückführung von Halteelementen mit verpackten Gegenständen von der Ausgangsseite des Lagerbereiches zurück zur Eingangsseite des Lagerbereiches dient.

Der in der Figur 1 dargestellte Lagerbereich 2 ist ein Beispiel dafür, wie ein Lagerbereich einer erfindungsgemässen Vorrichtung ausgestaltet sein kann. Der Lagerbereich kann aber auch anders ausgestaltet sein.

Wenn die Einrichtung derart betrieben wird, dass auf jedem Lagerstrang der Mehrzahl von funktionell parallelen Lagersträngen nur je ein Typ von Gegenständen gelagert wird, kann der Lager-Rückführungsstrang 6 fehlen, denn es ist in einem derartigen Fall von jedem gelagerten Gegenstandstyp immer ein Gegenstand abrufbar. Dabei können aber nur so viele Gegenstandstypen gehandhabt werden, wie Lagerstränge vorhanden sind, und es ist vorteilhaft, Lagerstränge verschiedener Länge vorzusehen und weniger gefragte Gegenstände in kleiner Zahlen auf kürzeren, mehr gefragte Gegenstände in grösseren Zahlen auf längeren Lagersträngen zu lagern.

Es ist auch möglich, auf funktionell parallele Lagerstränge zu verzichten und nur einen Lagerstrang und einen Lager-Rückführungsstrang 6 vorzusehen sowie zwei bifunktionale Weichen, die den Lagerstrang mit dem Zuführungsstrang und dem Auslieferungsstrang verbinden oder mit dem Lager-Rückführungsstrang zu einem Kreis schliessen. Auf dem Lagerstrang und gegebenenfalls auch auf dem Lager-Rückführungsstrang gelagerte Haltelemente mit verpackten Gegenständen werden dann für die Abrufung eines spezifischen Gegenstandes auf Lagerstrang und Rückführungsstrang zirkuliert, bis der abgerufene Gegenstand in den Bereich der ausgangsseitigen Weiche kommt. Dann wird die Weiche umgestellt und der Gegenstand auf den Auslieferungsstrang geführt.

Der Lagerbereich kann auch sackgassen-artige Schienenstränge aufweisen, auf denen Halteelemente mit verpackten Gegenständen in einer first-in-last-out Art gelagert werden.

Zur Erhöhung der Pufferkapazität für leere Halteelemente können zusätzlich zum Rückführungsstrang 4 dazu funktionell parallele Pufferstränge 4.1, 4.2, ... vorgesehen werden. Die Pufferkapazität im Bereiche des Rückführungsstranges 4 kann selbstverständlich auch auf andere Weise erhöht werden: beispielsweise durch eine spiralförmige Verlängerung des Rückführungsstranges 4 oder durch einen Sackgasse-artigen Pufferstrang, der als first-in-last-out-Pufferspeicher benutzt wird

Die entlang den Schienensträngen des Schienensystems unabhängig voneinander verfahrbaren Halteelemente sind in der Figur 1 nicht dargestellt.

Schienensysteme mit voneinander unabhängigen Halteelementen, sowie entsprechende Antriebe und steuerbare Weichen, die sich für die Anwendung in einer erfindungsgemässen Einrichtung eignen, sind beispielsweise beschrieben in den folgenden Publikationen: WO-99/33731 (F475), WO-00/56639 (F505), WO-00/61470 (F506), WO-99/54244 (F488), EP-0936161 (F482), EP-0870934 (oder US-6118810, F453), WO-98/03420 (F434) oder EP-856480 (F451).

Die Einrichtung weist ferner eine Verpackungs- und Übernahmestation 10, eine Adressier- und Abgabestation 11 und eine Rechnereinheit 12 auf.

Der Verpackungs- und Übernahmestation 10 werden im wesentlichen vereinzelte Gegenstände (Pfeil 13) und Verpackungsmaterial (Pfeil 14) zugeführt. Das Verpakkungsmaterial besteht beispielsweise aus geeigneten Beuteln, in die die Gegenstände eingebracht und die dann verschlossen werden. Die Halteelemente sind beispielsweise mit je einem Greifer ausgestattet, die je einen verschlossenen Beutel ergreifen. Eine Einrichtung zum Ergreifen von auf einem Förderband zugeführten Beuteln mit Hilfe von Greifern ist beispielsweise beschrieben in der Publikation EP-0903308 (F467). Es ist auch denkbar, die leeren Beutel mit den Greifern zu ergreifen, die Gegenstände in die ergriffenen Beutel zu füllen, die Beutel in unverschlossenem Zustand mit der Öffnung gegen oben hängend zu transportieren und zu lagern und erst in der Adressier- und Abgabestation zu verschliessen. Es ist auch möglich, anderes Verpackungsmaterial als Beutel zu verwenden. Wichtig ist, dass alle in der Verpakkungs- und Übernahmestation erstellten Verpackungen mit im wesentlichen denselben Halteelementen transportierbar sind.

Von der Adressier- und Abgabestation 12 werden versandbereite (verpackte und gemäss Destination bezeichnete) Gegenstände (Pfeil 15) weggeführt. Die Bezeichnung der verpackten Gegenstände kann durch Aufkleben einer entsprechend bedruckten Etikette, durch direktes Aufdrucken einer Adresse oder eines entsprechenden Codes oder in irgend einer anderen, geeigneten Weise erfolgen. Für die Abgabe der verpackten Gegenstände von den Halteelementen kann wie für die Übernahme durch die Halteelemente in der Verpackungs- und Übernahmestation die in der Publikation EP-0903308 (F467) beschriebene Einrichtung zur Anwendung kommen.

Die Rechnereinheit 12 erzeugt aus zugeführten oder eingegebenen Daten Steuerdaten zur Steuerung von Funktionseinheiten der Einrichtung. Die zugeführten Daten betreffen die zugeführten Gegenstände und die auszuliefernden Gegenstände und werden der Rechnereinheit beispielsweise vom Bereich der Verpackungs- und Übernahmestation 10 und/oder von extern zugeführt. Die Rechnereinheit 12 erzeugt daraus Daten einerseits für die eingangsseitige Steuerung, die die Verpackung und die Übernahme der Gegenstände durch Halteelemente sowie Weichenstellungen für die Zuweisung der beladenen Halteelemente zu Lagersträngen 4.1, 4.2, ... betrifft. Andererseits erzeugt die Rechnereinheit Steuerdaten für die ausgangsseitige Steuerung, die Weichenstellungen für die Entlassung von beladenen Halteelementen aus dem Lagerbereich 2 sowie die Destinations-bezogene Bezeichnung und Abgabe der aus der Lagerung entlassenen Gegenstände betrifft. Wenn ein Lager-Rückführungsstrang 6 vorhanden ist, erzeugt die Rechnereinheit 12 auch Steuerdaten für Weichenstellungen, durch die beladenen Halteelemente vom Ausgang des Lagerbereiches 2 zu dessen Eingang zurückgeführt werden. Dies kann notwendig werden, um nicht auszuliefernde Gegenstände, die Ausgänge von Lagersträngen 2.1, 2.2, ... für die Auslieferung weiterer Gegenstände blockieren, zu entfernen.

Auch die Steuerung einer Pufferanordnung für die leeren Halteelemente zwischen der Adressier- und Abgabestation 11 und der Verpackungs- und Übernahmestation 10 kann durch die Rechnereinheit 12 erfolgen. Diese Steuerung kann aber auch autonom oder teilautonom über eine lokale Steuereinheit 20 erfolgen, wobei der lokalen Steuereinheit 20 sensorisch erfasste Daten betreffend Füllstand der Pufferstränge 4.1, 4.2, ... und betreffend der der Verpackungs- und Übernahmestation 10 zugeführten Gegenstände (Pfeil 13) übermittelt und daraus die notwendigen Steuerdaten für die Steuerungen der steuerbaren Weichen 5 erzeugt werden.

Die Rechnereinheit 12 kann ferner Daten erzeugen, die für weitere Zwecke verwendbar und/oder an andere Rechnereinheiten übermittelbar sind (z.B. Daten für Fakturierung, Daten für statistische Auswertungen und Buchhaltung etc.).

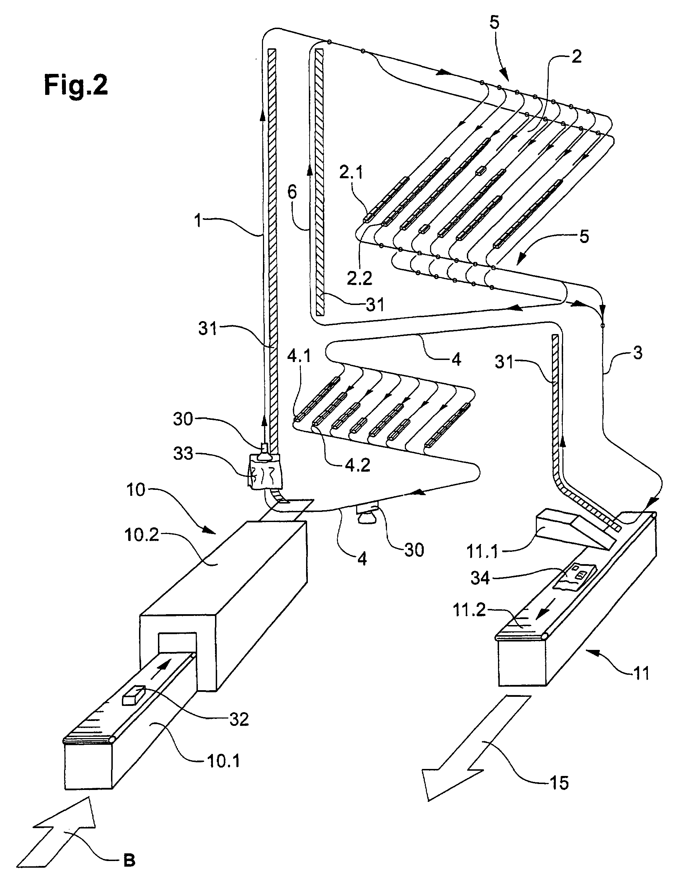

**Figur 2** zeigt mit mehr Detail als Figur 1 eine vorteilhafte Ausführungsform der erfindungsgemässen Einrichtung. Diese weist dieselben Elemente auf wie die in der Figur 1 dargestellte Einrichtung. Gleiche Elemente sind deshalb mit gleichen Bezugsziffern bezeichnet.

Das Schienensystem mit den darauf unabhängig voneinander verfahrbaren Halteelementen 30 beruht beispielsweise auf dem in der Publikation WO-99/33731 (F475) beschriebenen Fördersystem. Der Zuführungsstrang 1, ein erster Teil des Auslieferungsstranges 3 und ein Teil des Lager-Rückführungsstranges 6 sind im wesentlichen senkrecht nach oben gerichtet und weisen entsprechende Antriebe 31 auf. Der Rest der Schienenstränge, insbesondere die funktionell parallel geführten Lagerstränge 2.1, 2.2, ... und Pufferstränge 4.1, 4.2, ... sind in Bewegungsrichtung der Halteelemente abfallend, so dass die Halteelemente entlang dieser Stränge mittels Schwerkraft bewegt werden.

Die Verpackungs- und Übernahmestation 10 weist ein Förderband 10.1 auf, auf dem die vereinzelten, noch unverpackten Gegenstände 32 abgelegt werden, und eine Verpackungsvorrichtung 10.2, in der die Gegenstände in Beutel (verpackte Gegenstände 33) verpackt werden.

Die Adressier- und Abgabestation 11 weist eine Adressiervorrichtung 11.1 auf und ein Wegförderband 11.2, auf dem verpackte und adressierte Gegenstände 34 bei der Abgabe durch die Halteelemente abgelegt und weggefördert werden.

Funktionseinheiten, die in der erfindungsgemässen Einrichtung anwendbar sind, sind einem Fachmann aus dem Stande der Technik generell bekannt. Wenn ein solcher Fachmann die vorliegende Beschreibung kennt, kann er solche an sich bekannte Funktionseinheiten problemlos für ihre Funktion in der erfindungsgemässen Einrichtung anpassen und entsprechend zusammenschalten.

## Patentansprüche

1. Verfahren zur vorübergehenden Lagerung und zur versandfertigen Auslieferung von Gegenständen (32, 33, 34), wobei die Gegenstände vor der Lagerung im wesentlichen vereinzelt, einzeln verpackt und von je einem Halteelement (30), das von anderen Halteelementen (30) unabhängig entlang von Schienensträngen eines Schienensystems bewegbar ist, übernommen werden, wobei die verpackten Gegenstände (33) mit den Halteelementen (30) vorübergehend auf Lagersträngen (2.1, 2.2, ...) des Schienensystems, die zusammen mit steuerbaren Weichen einen Lagerbereich (2) bilden, gelagert und bei Bedarf aus der Lagerung entnommen werden, wobei die entnommenen, verpackten Gegenstände (33) für die Auslieferung gemäss Destination bezeichnet und von den Halteelementen (30) abgegeben werden und wobei die Halteelemente (30) nach der Abgabe der verpackten Gegenstände (33) für eine weitere Übernahme zurückgeführt werden.

2. Verfahren nach Anspruch 1, **dadurch gekennzeichnet, dass** im Lagerbereich eine Mehrzahl von funktionell parallelen Lagersträngen (2.1, 2.2, ...) vorgesehen ist, die über eingangsseitige und ausgangsseitige Weichen (5) verbunden sind.

3. Verfahren nach Anspruch 2, **dadurch gekennzeichnet, dass** auf jedem der funktionell parallelen Lagerstränge nur ein Typ von Gegenständen gelagert wird.

4. Verfahren nach einem der Ansprüche 1 bis 3, **dadurch gekennzeichnet, dass** Halteelemente (30) mit verpackten Gegenständen (33) von einer Ausgangsseite des Lagerbereichs (2) über einen Lager-Rückführungsstrang (6) zu einer Eingangsseite des Lagerbereichs (2) zurückgeführt werden.

5. Verfahren nach Anspruch 4, **dadurch gekennzeichnet, dass** eine Mehrzahl von Halteelementen (30) mit verpackten Gegenständen (33) auf einem durch einen Lagerstrang, einen Lager-Rückführungsstrang (6) und eine eingangsseitige und eine ausgangsseitige Weiche (5) gebildeten Schienenkreis zirkuliert werden, bis ein vorgegebener der Gegenstände (33) die ausgangsseitige Weiche erreicht und aus dem Lagerbereich (2) entnommen werden kann.

6. Verfahren nach einem der Ansprüche 1 bis 5, **dadurch gekennzeichnet, dass** die vereinzelten Gegenstände (32) in Beutel verpackt werden und dass die Beutel von Greifern der Halteelemente (30) ergriffen und im wesentlichen an den Halteelementen (30) hängend transportiert und gelagert werden.

7. Verfahren nach einem der Ansprüche 1 bis 6, **dadurch gekennzeichnet, dass** die Halteelemente (30) mindestens entlang der Lagerstränge (2.1, 2.2, ...) mittels Schwerkraft angetrieben werden.

8. Verfahren nach einem der Ansprüche 1 bis 7, **dadurch gekennzeichnet, dass** die leeren Halteelemente (30) während der Rückführung gepuffert werden.

9. Verfahren nach einem der Ansprüche 1 bis 8, **dadurch gekennzeichnet, dass** das Verfahren anhand von Daten bezüglich zugeführter und auszuliefernder Gegenstände gesteuert wird.

10. Verfahren nach einem der Ansprüche 1 bis 9, **dadurch gekennzeichnet, dass** mindestens Teile des Verfahrens lokal und autonom anhand von sensorisch von den Haltemitteln (30) oder von den verpackten Gegenständen (33) erfassten Daten gesteuert wird.

11. Einrichtung zur vorübergehenden Lagerung und zur versandfertigen Auslieferung von Gegenständen (32, 33, 34), welche Einrichtung ein im wesentlichen in sich geschlossenes Schienensystem mit einer Mehrzahl von Halteelementen (30), mindestens eine Verpackungs- und Übernahmestation (10), mindestens eine Adressier- und Abgabestation (11) und mindestens eine Rechnereinheit (12) aufweist, wobei das Schienensystem einen Lagerbereich (2) mit mindestens einem Lagerstrang (2.1, 2.2, ...) und steuerbaren Weichen (5), mindestens einen von der Verpackungs- und Übernahmestation (10) zum Lagerbereich (2) führenden Zuführungsstrang (1), mindestens einen vom Lagerbereich (2) zur Adressier- und Abgabestation (11) führenden Auslieferungsstrang (3) und mindestens einen von der Adressier- und Abgabestation (11) zur Verpackungsund Übernahmestation (10) führenden Rückführungsstrang (4) aufweist, wobei die Verpackungs- und Übernahmestation (10) für die Verpackung von im wesentlichen vereinzelten Gegenständen (32) und deren Übernahme durch je ein Halteelement und die Adressier- und Abgabestation (11) für eine Destinations-bezogene Bezeichnung der verpackten Gegenstände (33) und deren Abgabe durch die Halteelementen (30) ausgerüstet ist und wobei die Rechnereinheit (12) für den Empfang von Daten bezüglich zugeführter und auszuliefernder Gegenstände (32, 34) und für die Erzeugung von Steuerdaten für die Steuerung der Verpackungs- und Übernahmestation (10), der Adressier- und Abgabestation (11) und der steuerbaren Weichen (5) ausgerüstet ist.

12. Einrichtung nach Anspruch 11, **dadurch gekennzeichnet, dass** der Lagerbereich eine Mehrzahl von funktionell parallelen Lagersträngen (2.1, 2.2, ...) aufweist, die über steuerbare Weichen (5) eingangsseitig mit dem Zuführungsstrang (1) und ausgangsseitig mit dem Auslieferungsstrang (3) wahlweise verbunden sind.

13. Einrichtung nach einem der Ansprüche 11 oder 12, **dadurch gekennzeichnet, dass** der Lagerbereich (2) zusätzlich einen Lager-Rückführungsstrang (6) aufweist.

14. Einrichtung nach einem der Ansprüche 11 bis 13, **dadurch gekennzeichnet, dass** die Halteelemente (30) Greifer zum Ergreifen von verpackten Gegenständen (32) aufweisen.

15. Einrichtung nach einem der Ansprüche 11 bis 14, **dadurch gekennzeichnet, dass** von den Schienensträngen des Schienensystems mindestens der Zuführungsstrang (1) und/oder der Auslieferungsstrang (3) in Bewegungsrichtung der Halteelemente (30) steigend angeordnet und mit einem geeigneten Antrieb (31) für Halteelemente (30) ausgerüstet ist und dass mindestens die Lagerstränge (2.1, 2.2, ...) derart abfallend angeordnet sind, dass Halteelemente (30) entlang dieser Lagerstränge (2.1, 2.2, ...) durch die Schwerkraft bewegbar sind.

16. Einrichtung nach einem der Ansprüche 11 bis 15, **dadurch gekennzeichnet, dass** die steuerbaren Weichen (5) als multifunktionale Weichen oder als Serien von bifunktionalen Weichen ausgestaltet sind.

17. Einrichtung nach einem der Ansprüche 11 bis 16, **dadurch gekennzeichnet, dass** zusätzlich zum Rückführungsstrang (4) mindestens ein dazu funktionell parallel verlaufender Pufferstrang (4.1, 4.2, ...) vorgesehen ist.

## Claims

1. Method for temporary storage and ready for dispatch delivery of objects (32, 33, 34), the method comprising the steps of: individualizing and individually packing supplied objects (32); taking over packed objects (33) each by one holding element (30) being movable along rail tracks of a rail system independently of other holding elements (30); temporarily storing the packed objects (33) with the holding elements (30) on storage tracks (2.1, 2.2, ...) of the rail system forming a storage area (2); on demand retrieving packed objects (33) with the holding elements (30) from storage; marking packed objects (33) retrieved from storage according to a destination, releasing the packed objects from the holding elements (30) and returning the holding elements (30) for a further taking-over operation.

2. Method in accordance with claim 1, **characterized in that** in the storage area a multitude of functionally parallel storage tracks (2.1, 2.2,...) is provided, which storage tracks are connected through switch points (5) on the input side and on the outlet side.

3. Method in accordance with claim 2, **characterized in that** on every one of the functionally parallel storage tracks objects of only one object type are stored.

4. Method in accordance with one of claims 1 to 3, **characterized in that** holding elements (30) with packed objects (33) are returned to an input side of the storage area (2) from an outlet side of the storage area (2) along a storage return track (6).

5. Method according to claim 4, **characterized in that** a multitude of holding elements (30) with packed objects (33) are circulated on a rail circuit formed by a storage track, a storage return track (6) and a switch point on the input side and on the outlet side (5), until a predefined one of the objects (33) reaches the switch point on the outlet side and is thus retrievable from the storage area (2).

6. Method in accordance with one of claims 1 to 5, **characterized in that** the objects (32) are packed in bags and that the bags are picked-up by grippers of the holding elements (30) and are transported and stored essentially suspended from the holding elements (30).

7. Method according to one of claims 1 to 6, **characterized in that** the holding elements (30) are driven by gravity at least along the storage tracks (2.1, 2.2, ...).

8. Method in accordance with one of claims 1 to 7, **characterized in that** empty holding elements (30) are buffered during return transportation.

9. Method according to one of claims 1 to 8, **characterized in that** the method is controlled on the basis of data regarding objects supplied and regarding objects to be delivered.

10. Method in accordance with one of claims 1 to 9, **characterized in that** at least parts of the method are controlled locally and autonomously on the basis of data recorded from the holding elements (30) or from the packed objects (33) by sensor means.

11. Installation for temporary storage and ready for dispatch delivery of objects (32, 33, 34), which device comprises an essentially closed-in-itself rail system with a multitude of holding elements (30), at least one packing and take-over station (10), at least one addressing and delivery station (11) and at least one computing unit (12), wherein the rail system comprises a storage area (2) with at least one storage track (2.1, 2.2, ...) and controllable switch points (5), at least one supply track (1) leading from the packing and take-over station (10) to the storage area (2), at least one delivery track (3) leading from the storage area (2) to the addressing and delivery station (11) and at least one return track (4) leading from the addressing and delivery station (11) to the packing and take-over station (10), wherein the packing and take-over station (10) is equipped for packing individual objects (32) and for their take-over by one holding element each and the addressing and delivery station (11) is equipped for marking the packed objects (33) in a destination-related manner and for releasing them from the holding elements (30) and wherein the computing unit (12) is equipped for receiving data regarding supplied objects (32) and objects to be delivered (34) and for generating control data for controlling the packing and take-over station (10), the addressing and delivery station (11) and the controllable switch points (5).

12. Installation in accordance with claim 11, **characterized in that** the storage area comprises a multitude of functionally parallel storage tracks (2.1, 2.2, ...), which are selectively connected through controllable switch points (5), on the input side with the supply track (1) and on the outlet side with the delivery track (3).

13. Installation according to one of the claims 11 or 12, **characterized in that** the storage area (2) further comprises a storage return track (6).

14. Installation in accordance with one of claims 11 to 13, **characterized in that** the holding elements (30) comprise grippers for picking-up packed objects (32).

15. Installation according to one of claims 11 to 14, **characterized in that** of the rail tracks of the rail system at least the supply track (1) and/or the delivery track (3) is arranged as ascending in the direction of holding element movement and is equipped with a drive (31) for driving the holding elements (30) and that at least the storage tracks (2.1, 2.2, ...) are arranged as being descending in such a manner, that holding elements (30) are driven along these storage tracks (2.1, 2.2, ...) by gravity.

16. Installation in accordance with one of claims 11 to 15, **characterized in that** the controllable switch points (5) are designed as multifunctional switch points or as series of bifunctional switch points.

17. Installation according to one of claims 11 to 16, **characterized in that** in addition to the return track (4) at least one buffer track (4.1, 4.2 ...) running functionally parallel to the return track is provided.

## Revendications

1. Procédé de stockage temporaire et la distribution pour expédition d'objets (32, 33, 34) qui sont pour l'essentiel, avant l'entreposage, isolés, emballés séparément et pris en charge chacun par un élément de maintien (30) mobile indépendamment d'autres éléments de maintien (30) le long de rails d'un système de rails, les objets emballés (33) étant provisoirement stockés avec les éléments de maintien (30) sur des travées de stockage (2.1, 2.2, ...) du système de rails qui forment avec des aiguillages contrôlables une zone de stockage (2) et étant retirés du stockage selon les besoins, les objets emballés (33) retirés étant identifiés selon leur destination et déposés par les éléments de maintien (30) pour la livraison et les éléments de maintien (30) étant ramenés après la dépose des objets (33) emballés en vue d'une prise en charge suivante.

2. Procédé selon la revendication 1, **caractérisé en ce qu'**il est prévu dans la zone de stockage une pluralité de travées de stockage (2.1, 2.2, ...) à fonctionnement parallèle, qui sont reliées par des aiguillages (5) du côté de l'entrée et de la sortie.

3. Procédé selon la revendication 2, **caractérisé en ce qu'**un seul type d'objets est stocké sur chacune des travées de stockage à fonctionnement parallèle.

4. Procédé selon l'une ou l'ensemble des revendications 1 à 3, **caractérisé en ce que** les éléments de maintien (30) portant des objets emballés (33) sont ramenés d'un côté de sortie de la zone de stockage (2) à un côté d'entrée de la zone de stockage (2) en passant par une travée de retour en stock (6).

5. Procédé selon la revendication 4, **caractérisé en ce qu'**une pluralité d'éléments de maintien (30) avec des objets emballés (33) sont mis en circulation sur un circuit de rails formé par une travée de stockage, une travée de retour en stock (6) et des aiguillages (5) du côté de l'entrée et de la sortie, jusqu'à ce qu'un objet prédéterminé parmi les objets (33) atteigne l'aiguillage du côté de la sortie et puisse être retiré de la zone de stockage (2).

6. Procédé selon l'une ou l'ensemble des revendications 1 à 5, **caractérisé en ce que** les objets isolés (32) sont emballés dans des sachets et **en ce que** les sachets sont saisis par des organes de préhension des éléments de maintien (30) et transportés et stockés en étant sensiblement suspendus aux éléments de maintien (30).

7. Procédé selon l'une ou l'ensemble des revendications 1 à 6, **caractérisé en ce que** les éléments de maintien (30) sont entraînés par gravité au moins le long des travées de stockage (2.1, 2.2, ...).

8. Procédé selon l'une ou l'ensemble des revendications 1 à 7, **caractérisé en ce que** les éléments de maintien (30) vides sont stockés en tampon pendant le retour.

9. Procédé selon l'une ou l'ensemble des revendications 1 à 8, **caractérisé en ce que** le procédé est contrôlé à l'aide de données concernant les objets acheminés et à distribuer.

10. Procédé selon l'une ou l'ensemble des revendications 1 à 9, **caractérisé en ce que** des parties au moins du procédé sont commandées localement et de façon autonome à l'aide de données obtenues par des capteurs au niveau des éléments de maintien (30) ou des objets emballés (33).

11. Dispositif pour le stockage temporaire et la distribution pour expédition d'objets (32, 33, 34), qui comprend un système de rails sensiblement fermé avec une pluralité d'éléments de maintien (30), au moins un poste d'emballage et de prise en charge (10), au moins un poste d'adressage et de dépose (11) et au moins une unité de calculateur (12), le système de rails possédant une zone de stockage (2) avec au moins une travée de stockage (2.1, 2.2, ...) et des aiguillages contrôlables (5), au moins une travée d'arrivée (1) menant du poste d'emballage et de prise en charge (10) à la zone de stockage (2), au moins une travée de distribution (3) menant de la zone de stockage (2) au poste d'adressage et de dépose (11) et au moins une travée de retour (4) menant du poste d'adressage et de dépose (11) au poste d'emballage et de prise en charge (10), le poste d'emballage et de prise en charge (10) étant équipé pour l'emballage d'objets (32) sensiblement isolés et leur prise en charge par un élément de maintien chacun et le poste d'adressage et de dépose (11) pour une identification des objets emballés (33) en fonction de la destination et leur dépose par les éléments de maintien (30), et l'unité de calculateur (12) étant équipée pour la réception de données concernant les objets amenés et à distribuer (32, 34) et pour la génération de données de commande pour la commande du poste d'emballage et de prise en charge (10), du poste d'adressage et de dépose (11) et des aiguillages contrôlables (5).

12. Dispositif selon la revendication 11, **caractérisé en ce que** la zone de stockage présente une pluralité de travées de stockage (2.1, 2.2, ...) à fonctionnement parallèle qui peuvent être reliées sélectivement par des aiguillages contrôlables (5) avec la travée d'arrivée (1) du côté de l'entrée et avec la travée de distribution (3) du côté de la sortie.

13. Dispositif selon l'une quelconque des revendications 11 ou 12, **caractérisé en ce que** la zone de stockage (2) présente en outre une travée de retour en stock (6).

14. Dispositif selon l'une ou l'ensemble des revendications 11 à 13, **caractérisé en ce que** les éléments de maintien (30) présentent des organes de préhension pour saisir les objets emballés (32).

15. Dispositif selon l'une ou l'ensemble des revendications 11 à 14, **caractérisé en ce que** parmi les travées de rails du système de rails, la travée d'arrivée (1) et/ou la travée de distribution (3) au moins sont disposées en pente ascendante dans le sens de déplacement des éléments de maintien (30) et équipées d'un entraînement (31) adéquat pour les éléments de maintien (30) et **en ce que** les travées de stockage (2.1, 2.2, ...) au moins sont disposées selon une pente descendante telle que les éléments de maintien (30) puissent être mus par la gravité le long de ces travées de stockage (2.1, 2.2, ...).

16. Dispositif selon l'une ou l'ensemble des revendications 11 à 15, **caractérisé en ce que** les aiguillages contrôlables (5) sont conçus comme des aiguillages multifonctions ou comme des séries d'aiguillages à deux fonctions.

17. Dispositif selon l'une ou l'ensemble des revendications 11 à 16, **caractérisé en ce qu'**outre la travée de retour (4), il est prévu au moins une travée servant de tampon (4.1, 4.2, ...) et fonctionnant en parallèle à celle-ci.
